# EUROPÄISCHE PATENTANMELDUNG

(11) **EP 1 686 150 A1**
(43) Veröffentlichungstag der Anmeldung: **02.08.2006**
(21) Anmeldenummer: 05001749.0
(22) Anmeldetag: 28.01.2005
(51) Int. Cl.: C08J 9/00, B32B 5/18, B32B 27/40

(54) **Verfahren zur Herstellung von Sandwichelementen**

(71) Anmelder: Solvay Fluor GmbH, 30173 Hannover (DE)
(72) Erfinder: Krücke, Werner, 30163 Hannover (DE)
(74) Vertreter: Kulik, Angelika

(57) **Zusammenfassung**

Sandwichelement umfassend Deckschichten aus Metall, Holz oder Kunststoff und eine Kernschicht aus einem geschäumten Kunstoff mit duroplastischen Eigenschaften und einer Rohdichte von 10 bis 32 kg/m3, wobei die vorgefertigte Kernschicht mit den Deckschichten mittels Hüllbauweise verklebt wurde.

## Beschreibung

Die Erfindung betrifft ein Verfahren zur Herstellung von Sandwichelementen, bestehend aus Metall-, Holz- oder Kunststoffdeckschichten und einer Kernschicht aus Kunststoffschaum, vorzugsweise Polyurethanschaumstoff.

Derartige Sandwichelemente werden in weiten Teilen der Technik, insbesondere als konstruktive Bauelemente mit Dämmwirkung gegen Wärme/Kälte und/oder Schall eingesetzt. Da Sandwichelemente häufig bei der Konstruktion von Gebäuden Verwendung finden, unterliegen sie strengen Zulassungsbestimmungen hinsichtlich der Statik und der Brandeigenschaften.

Als Kernschichtwerkstoff werden vorzugsweise Hartschäume auf Basis von Polyurethan (PU) eingesetzt. Kernschichten auf Basis von expandiertem Polystyrol (EPS) oder extrudiertem Polystyrol (XPS) oder Phenolharzen sind ebenfalls bekannt. Die Dichte des Schaumstoffes liegt üblicherweise bei ca. 50 bis 100 kg/m3. Als Mindestrohdichte zur Gewährleistung der statischen Festigkeitswerte wird als niedrigste Rohdichte des Schaumstoffes bislang 36 bis 38 kg/m3 vorgeschrieben. Ein weitere wesentliches Merkmal dieser Kernschichten ist deren Festigkeit, die als Druckspannungswerte gemessen wird, und deren Brandeigenschaften um gewisse Normstandards zu erreichen.

Die Herstellung der Sandwichelemente ist hinlänglich bekannt und kann im Wesentlichen auf zwei Arten erfolgen. Bei der sogenannten Füllbauweise werden die Deckschichten vorgelegt und der Hohlraum zwischen den Deckschichten mit dem Kunststoff z.B. einem Polyurethanschaum ausgeschäumt. Vorteil dieser Direktverschäumung ist, daß die Deckplatten mit der entstehenden Schaumstoffzwischenschicht automatisch verkleben. Nachteil dieses Verfahrens ist, daß bei Verwendung von PU- oder PU/PIR-Hartschaum, die Haftung der Deckschichten nur mit erhöhtem Energiebedarf gelöst werden kann und somit nur Schaumstoffe mit Rohdichten von 36 bis 48 kg/m3 verwendet werden können. Als PIR-Schaum wird ein PU-Schaum mit erhöhtem Isocyanatanteil bezeichnet. Bei der sogenannten Hüllbauweise wird eine vorgefertigte Kernschicht, beispielsweise eine Mineralwollplatte oder eine Schaumstoffplatte, mit einem geeigneten Hüllmaterial aus Metall, Holz oder Kunststoff zum Beispiel durch Verkleben verbunden, wobei die gesamte Konstruktion z.B. in einer Presse unter Druck gesetzt wird oder in einem luftdichten Raum evakuiert wird, so daß der Luftdruck die Teile beim Abbinden des Klebers zusammenpreßt. Die EP 0771828 beschreibt die Herstellung von Sandwichelementen mittels der Hüllbauweise, wobei als Kernschicht ein PU-Schaumstoff verwendet wird, der eine Rohdichte von 50 bis 1500 kg/m3 besitzt und aus Polyurethan- und/oder Polyharnstoffabfällen gewonnen wird.

Sandwichelemente mit Mineralwollplatten als Kernschicht besitzen auf Grund ihrer optimalen Brandschutzeigenschaften breite Anwendungsmöglichkeiten, sind aber sehr aufwendig in ihrer Herstellung. Um die geforderten Druckspannungen zu erreichen müssen Mineralwollplattensegmente einzeln verklebt werden, wobei die Segmente so angeordnet werden, daß die Faserrichtung um 90° gedreht wird. Zur Erreichung der statischen Werte werden Mineralwollplatten mit einer Rohdichte von mindestens 100 kg/m3 eingesetzt.

Es ist ebenfalls bekannt, Sandwichplatten mit expandiertem Polystyrol (EPS) als Kernschicht herzustellen und einzusetzen. Die Rohdichte dieser Kernschichten liegt häufig im Bereich von 15 bis 20 kg/m3. Auch hier wird mittels Kleber der Verbund zwischen Kern- und Deckschicht hergestellt. Da EPS ein Kunststoffschaumstoff auf Basis eines Thermoplast darstellt, ist die Temperaturbelastung dieser Sandwichelemente auf etwa 80 bis 90°C beschränkt. Das gleiche gilt für Sandwichelemente, die extrudiertes Polystyrol (XPS) als Kernschicht aufweisen.

Es bestand daher die Aufgabe, Sandwichelemente mit hohen Festigkeitswerten und guten Brandschutzeigenschaften bei niedriger Rohdichte des Kernmaterials, sowie ein Verfahren zur Herstellung dieser Sandwichelemente, bereitzustellen.

Es wurde gefunden, daß bei der Nutzung der an sich bekannten Hüllbauweise, Sandwichelemente mit den geforderten anwendungsspezifischen Eigenschaften herstellbar sind, wenn vorgefertigte Schaumstoffplatten auf Basis duroplastischer Kunststoffe, beispielsweise PU-Schaumstoffplatten, PIR-Schaumstoffplatten und/oder PU/PIR-Schaumstoffplatten als Kernmaterial verwendet werden, wobei erfindungsgemäß Schaumstoffplatten mit einer Rohdichte von 10 bis 32 kg/m3 als Kernmaterial bzw. als Kernschicht verwendet werden. Durch die Möglichkeit der Vorfertigung der Schaumstoffplatten kann nunmehr das gesamte Spektrum der PU- und/oder PIR-Schaumstoffe eingesetzt werden. PU-Weichschaumstoff wird vorzugsweise zur Schalldämmung und PU/PIR-Schaumstoff für den Anwendungsbereich Wärmedämmung mit erhöhtem Brandschutz eingesetzt.

Die Herstellung von Polyurethan-Schaumstoff ist bekannt und nicht Gegenstand der vorliegenden Erfindung. Als Ausgangsstoffe werden Polyol, Isocyanat, Zusatzstoffe und Treibmittel zur Reaktion gebracht. Die Verwendung von Treibmitteln auf Basis von HFC 365mfc bei der Herstellung der Schaumstoffe führt zu Produkten mit exzellenten Brandschutzeigenschaften, insbesondere bei zusätzlicher Verwendung von bromierten Polyetherpolyolen wie beispielsweise IXOL B 251, IXOL M 125 und/oder halogenierten, insbesondere bromierten Epoxiden.

Die Schaumstoffplatten werden in bekannter Weise mittels kontinuierlich arbeitenden Blockfertigungsanlagen hergestellt und danach in Spaltanlagen auf die geforderten Maße gebracht.

Die Herstellung der Sandwichelemente erfolgt durch Verkleben der Kernschicht mit den entsprechenden Deckschichten. Die Deckschichten können beispielsweise aus Holz, Metall oder Kunststoff gefertigt sein. Die vorgefertigte Schaumstoffplatte wird zwischen den Deckschichten angeordnet. Das kann in unterschiedlicher Weise erfolgen, z. B. indem die Schaumstoffplatte kontinuierlich in den Zwischenraum der beiden Deckschichten, einem sogenannten Doppelband, eingeführt wird. Es ist ebenfalls eine diskontinuierliche Arbeitsweise denkbar, wobei die vorgefertigte Schaumstoffplatte auf eine Deckschicht aufgelegt wird und mit der anderen Deckschicht abgedeckt wird. In beiden Fällen wird der Kleber auf die Unter- und auf die Oberseite der Schaumstoffplatte aufgebracht und der Verbund der Schichten miteinander durch Verkleben hergestellt. Gegebenenfalls kann das Verkleben der einzelnen Schichten miteinander durch Druckeinwirkung beschleunigt oder verbessert werden.

Als Kleber können in Abhängigkeit von der Art der Deckschichten oder des Einsatzgebietes alle geeigneten Klebemittel verwendet werden. In einer Ausführungsform der Erfindung wurde ein Reaktionskleber auf Basis von PU- Rohstoffen verwendet.

Es wurde gefunden, daß durch die Verwendung von vorgefertigten Schaumstoffplatten als Kernschicht Sandwichelemente herstellbar sind, die den gewünschten Anforderungen, z. B. bezüglich Festigkeit, Brandschutzeigenschaften und Dämmverhalten, gerecht werden. Ein weiterer Vorteil ist, daß das Gewicht der Sandwichelemente verringert werden kann, da Schaumstoffplatten mit einer Rohdichte im Bereich von 10 bis 32 kg/m3, insbesondere im Bereich von 28 bis 32 kg/m3 als Kernmaterial verwendet werden. So ist es möglich, das Gewicht der Sandwichelemente um ca. 50 % zu verringern. Bedingt durch die Vorfertigung der Schaumstoffplatten ist es ebenfalls möglich, hochflammgeschützte Schaumstoffe als Kernschicht einzusetzen.

Das nachfolgende Beispiel soll die Erfindung erläutern jedoch nicht in ihrem Umfang einschränken.

### Beispiel 1:

In einer kontinuierlich arbeitenden Fertigungsanlage zur Herstellung von Sandwichelementen wurden die Deckschichten in Form eines Doppelbandes kontinuierlich in einem vorgegebenen Abstand zueinander zusammengebracht. In den Zwischenraum des Doppelbandes wurde kontinuierlich die vorgefertigte PU- Schaumstoffplatte eingebracht. Auf der Oberseite und der Unterseite der Schaumstoffplatte wurde der Reaktionskleber auf Basis PU-Rohstoffe aufgetragen. Die Verbindung der Deckschichten mit der Schaumstoffplatte erfolgte durch Verkleben unter Druckeinwirkung. Das Verkleben der Schichten miteinander erforderte keine zusätzliche Heizenergie.

## Patentansprüche

1. Sandwichelement umfassend mindestens eine obere Deckschicht, eine Kernschicht aus geschäumten Kunststoff und mindestens eine untere Deckschicht, **dadurch gekennzeichnet, daß** die Kernschicht eine vorgefertigte Schaumstoffplatte auf Basis duroplastischer Kunststoffe mit einer Rohdichte von 10 bis 32 kg/m3 ist.

2. Sandwichelement nach Anspruch 1, **dadurch gekennzeichnet, daß** die Kernschicht eine Polyurethanschaumstoffplatte mit einer Rohdichte von 10 bis 32 kg/m3 ist.

3. Sandwichelement nach Anspruch 1, **dadurch gekennzeichnet, daß** die Kernschicht eine PIR- oder PU/PIR-Schaumstoffplatte mit einer Rohdichte von10 bis 32 kg/m3 ist.

4. Verfahren zur Herstellung von Sandwichelementen nach der Hüllbauweise wobei vorgefertigte Schaumstoffplatten mit einer Rohdichte von 10 bis 32 kg/m3 mit den Deckschichten verklebt werden.

5. Verfahren zur Herstellung von Sandwichelementen nach Anspruch 4, **dadurch gekennzeichnet, daß** Schaumstoffplatten auf Basis duroplastischer Kunststoffe verwendet werden.

6. Verfahren zur Herstellung von Sandwichelementen nach Anspruch 4 und 5, **dadurch gekennzeichnet, daß** PU- , PIR- oder PU/PIR-Schaumstoffplatten mit einer Rohdichte von 10 bis 32 kg/m3 verwendet werden, der Kleber auf die Ober- und die Unterseite der Schaumstoffplatte aufgebracht wird und die Schaumstoffplatten mit den Deckschichten verklebt werden.
